# EUROPÄISCHE PATENTSCHRIFT

(11) **EP 3 548 244 B1**
(45) Veröffentlichungstag und Bekanntmachung des Hinweises auf die Patenterteilung: **22.03.2023**
(21) Anmeldenummer: 17811225.6
(22) Anmeldetag: 22.11.2017
(51) Int. Cl.: B29C 44/34, B29C 44/12, B29C 44/58, B29L 31/00, B29L 31/30, B60J 1/00

(54) **VORRICHTUNG UND VERFAHREN ZUM BEARBEITEN EINES DECKELS SOWIE ANORDNUNG FÜR EIN FAHRZEUGDACH UND FAHRZEUGDACH FÜR EIN KRAFTFAHRZEUG**
DEVICE AND METHOD FOR PROCESSING A COVER, ASSEMBLY FOR A VEHICLE ROOF, AND VEHICLE ROOF FOR A MOTOR VEHICLE
DISPOSITIF ET PROCÉDÉ DE TRAITEMENT D'UNE COUVERTURE AINSI QU'AGENCEMENT POUR UN TOIT DE VÉHICULE ET TOIT DU VÉHICULE POUR UN VÉHICULE À MOTEUR

(30) Priorität: 29.11.2016 DE 102016123021
(43) Veröffentlichungstag der Anmeldung: 09.10.2019
(73) Patentinhaber: Webasto SE, 82131 Stockdorf (DE)
(72) Erfinder: SCHRÖFERL, Thomas, 82131 Stockdorf (DE); HARNISCHFEGER, Bernhard, 82131 Stockdorf (DE)
(74) Vertreter: Epping - Hermann - Fischer
(86) Internationale Anmeldenummer: PCT/EP2017/080099
(87) Internationale Veröffentlichungsnummer: WO 2018/099786

(56) Entgegenhaltungen:
- DE-A1-102004 056 479
- US-A- 5 665 397
- US-A1- 2006 237 870
- US-A1- 2014 342 031

## Beschreibung

Die Erfindung betrifft eine Vorrichtung und Verfahren zum Bearbeiten eines Deckels für ein Kraftfahrzeug, die zu einer zeitsparenden und kostengünstigen Konstruktion des Fahrzeugdachs beitragen können.

Bei einem Herstellen und Anbringen einer Umschäumung an einer Scheibe oder einem Deckel für Kraftfahrzeuge wird üblicherweise das zu bearbeitende Werkstück mittels spezieller Formwerkzeuge behandelt. Zum Beispiel wird mittels Ausbilden und Auffüllen einer Kavität eine Umschäumung an einem Rand der Scheibe ausgebildet. Auf diese Weise ist es möglich, Bauteile mit der Scheibe zu verbinden und ein Anbinden der Scheibe an einer Karosserie eines Kraftfahrzeugs vorzubereiten.

Ein dafür benötigtes spezielles Form- oder Schäumwerkzeug weist in der Regel zwei Werkzeughälften auf, die als Ober- und Unterteil aufeinander abgestimmt sind und ein Ausbilden von Umschäumungen ermöglichen. Dabei müssen die Werkzeughälften in jeweiligen Formträgern gehalten und bewegbar sein, um ein gewünschtes Ausbilden von Umschäumungen zu ermöglichen. Ein solches Ausbilden einer Umschäumung ist zum Beispiel in dem Dokument EP 0355209 B1 beschrieben.

Es ist eine Aufgabe, die der Erfindung zugrunde liegt, eine Vorrichtung und Verfahren zum Bearbeiten eines Deckels für ein Kraftfahrzeug zu schaffen, die eine zeitsparende und kostengünstige Konstruktion einer Anordnung für ein Fahrzeugdach sowie eines Fahrzeugdachs für das Kraftfahrzeug ermöglichen.

US 2006/237870A1 betrifft ein Umspritzen eines Kunststoffs auf einen Gegenstand, wie beispielsweise ein Fenster, insbesondere für ein Kraftfahrzeug.

Die Aufgabe wird durch die Merkmale der unabhängigen Patentansprüche gelöst. Vorteilhafte Weiterbildungen sind in den Unteransprüchen angegeben.

Eine erfindungsgemäße Vorrichtung zum Bearbeiten eines Deckels für ein Kraftfahrzeug umfasst ein Unterwerkzeug, welches ein Dichtelement sowie eine erste Ausnehmung und ein zu der ersten Ausnehmung beabstandete zweite Ausnehmung aufweist. Das Dichtelement ist teilweise so in der ersten Ausnehmung des Unterwerkzeugs angeordnet, dass es sich gegenüber einer Oberfläche des Unterwerkzeugs erstreckt. Das Dichtelement und die zweite Ausnehmung des Unterwerkzeugs sind dazu ausgebildet, im Zusammenwirken mit einer Unterseite des Deckels eine Kavität auszubilden und vorgegeben zu begrenzen. Die Vorrichtung umfasst weiter ein Gegenlager, das dazu ausgebildet ist, bei einem Ausbilden der Kavität an der Unterseite des Deckels eine Gegenkraft an einer Oberseite des Deckels in Richtung des Unterwerkzeugs auszuüben, sodass mittels des Unterwerkzeugs und des Gegenlagers an der Unterseite des Deckels eine Anschäumung beabstandet von einem Rand des Deckels ausbildbar ist, sodass der Rand des Deckels umschäumungsfrei verbleibt. Das Dichtelement ist als Schattenfugendichtung ausgebildet, die sich aus der ersten Ausnehmung des Unterwerkzeugs heraus erstreckt und bei einem Anliegen des Deckels vorgegeben abknickt oder sich vorgegeben abbiegt.

Mittels der beschriebenen Vorrichtung ist ein zeitsparendes und aufwandarmes Bearbeiten eines Deckels für ein Kraftfahrzeug realisierbar, welches weiter eine zeitsparende und kostengünstige Konstruktion einer Anordnung für ein Fahrzeugdach sowie eines Fahrzeugdachs für das Kraftfahrzeug ermöglicht.

Die Vorrichtung realisiert ein Werkzeug zum Bearbeiten eines Deckels oder eines anderen plattenförmigen Werkstücks für ein Kraftfahrzeug, welches ein Ausbilden einer Anschäumung an dem Deckel ermöglicht, ohne den Rand des Deckels in einen Schäumungsprozess mit einzubeziehen. Die Vorrichtung bildet ein einfaches Werkzeugkonzept für ein Schäumwerkzeug aus, welches kein kompliziertes formgebendes Oberwerkzeug benötigt, sondern lediglich ein Gegenlager, um bei einem Bearbeiten des Deckels eine Anlage auszubilden und eine Gegenkraft bereitzustellen. Mittels des Unterwerkzeugs ermöglicht die Vorrichtung ein Ausbilden der Anschäumung an einer oder mehreren vorgegebenen Positionen an der Unterseite des Deckels beabstandet zu dem Rand, sodass dieser umschäumungsfrei verbleibt.

Dadurch, dass der Deckel angeschäumt ist und der Rand umschäumungsfrei ausgebildet ist, entfällt ein aufwendiges Nachbearbeiten einer Randumschäumung und es wird ein Beitrag für ein zeit- und kostensparendes Bearbeiten des Deckels und eine kostengünstige Konstruktion eines zugehörigen Fahrzeugdachs geleistet. Bei einer konventionellen Umschäumung eines Deckels mit einer Randumschäumung bildet sich in der Regel ein Trenngrat aus, welcher durch einen Spalt zwischen zwei zusammenwirkenden Werkzeughälften begründet ist. Im Rahmen eines Spritzgussprozesses dringt das Schäummaterial unerwünscht in diesen Spalt ein, sodass nach einem Aushärten des Schäummaterials eine Art Fell verbleibt, welches von der vorgesehenen Randumschäumung absteht und wie ein Fell nach unten hängt. Für eine gewünschte Oberflächenbeschaffenheit und ein ansprechendes Endergebnis ist es erforderlich, ein solches Fell beziehungsweise einen solchen Trenngrat mittels aufwendiger mechanischer Nacharbeit zu entfernen.

Die mittels der beschriebenen Vorrichtung ausbildbare Anschäumung ist so an der Unterseite des Deckels ausgestaltbar, dass ein äußerer Rand der Anschäumung noch an der Unterseite des Deckels endet und der Rand des Deckels umschäumungsfrei verbleibt. Es ist somit ein Abstand zwischen dem Rand des Deckels und der Anschäumung an der Unterseite des Deckels vorhanden. Aufgrund eines solchen Abstands kann vorteilhaft das Dichtelement des Unterwerkzeugs dazu eingesetzt werden, die Kavität zwischen dem Deckel und dem Unterwerkzeug abzudichten und vorgegeben zu begrenzen, um ein zuverlässiges Auffüllen der Kavität und Ausbilden der Anschäumung mit einem ansprechenden Endergebnis zu ermöglichen. Die ausgebildete Anschäumung bedarf keiner aufwendigen Nachbearbeitung, im Rahmen derer ein Teil der Anschäumung zu entfernen wäre.

Der Deckel repräsentiert ein plattenförmiges Werkstück, welches bevorzugt mittels der Vorrichtung bearbeitbar ist und welches eine wesentliche Haupterstreckungsebene aufweist, die im Vergleich zu einer Dicke des Deckels deutlich überwiegt. Zum Beispiel weist der Deckel eine Dicke von einigen Millimetern bis Zentimetern auf, während sich eine Länge und eine Breite des Deckels über viele zehn Zentimeter ausdehnen. Die Unterseite, die Oberseite und der Rand des Deckels sowie weitere Richtungsangaben, wie oben, unten, vorne und hinten, beziehen sich im Rahmen dieser Erfindung auf Positions- und Ortsangaben hinsichtlich eines betriebsbereiten Zustands eines Kraftfahrzeugs, welches ein Fahrzeugdach mit einem solchen Deckel aufweist. Die Oberseite des Deckels ist daher gegenüberliegend zu der Unterseite des Deckels ausgebildet und in einem verbauten Zustand dem Fahrzeuginnenraum abgewandt. Der Rand umgibt beziehungsweise begrenzt den Deckel seitlich und verbindet die Oberseite des Deckels mit der Unterseite.

Das Dichtelement des Unterwerkzeugs ist als Schattenfugendichtung ausgebildet. Eine Schattenfugendichtung ermöglicht ein besonders zuverlässiges und sauberes Anschäumen der Deckelunterseite. Die Schattenfugendichtung erstreckt sich aus der ersten Ausnehmung des Unterwerkzeugs heraus und knickt oder biegt sich bei einem Anliegen des Deckels vorgegeben ab. Für ein Ausbilden der Anschäumung werden die zusammenwirkenden Komponenten zueinander so positioniert, dass der Deckel zwischen dem Unterwerkzeug und dem Gegenlager eingespannt ist und die Kavität an der Unterseite des Deckels mittels der zweiten Ausnehmung und der Schattenfugendichtung kontrolliert ausgebildet und abgedichtet ist.

Gemäß einer Weiterbildung der Vorrichtung weist das Unterwerkzeug ein weiteres Dichtelement und eine weitere dritte Ausnehmung auf, die in Bezug auf die erste Ausnehmung an einer gegenüberliegenden Seite der zweiten Ausnehmung beabstandet zu der zweiten Ausnehmung ausgebildet ist. Das weitere Dichtelement ist teilweise so in der dritten Ausnehmung des Unterwerkzeugs angeordnet, dass es sich gegenüber einer Oberfläche des Unterwerkzeugs erstreckt. Das weitere Dichtelement und die zweite Ausnehmung des Unterwerkzeugs sind dazu ausgebildet, im Zusammenwirken mit der Unterseite des Deckels die Kavität vorgegeben zu begrenzen. Ein weiteres Dichtelement des Unterwerkzeugs kann bevorzugt zu einem zuverlässigen und sauberen Ausbilden der Anschäumung beitragen.

Gemäß einer Weiterbildung der Vorrichtung ist das weitere Dichtelement des Unterwerkzeugs als Fadendichtung ausgebildet. Die Fadendichtung ist insbesondere gegenüberliegend zu der Schattenfugendichtung beziehungsweise dem Dichtelement auf einer anderen Seite der formgebenden zweiten Ausnehmung des Unterwerkzeugs ausgebildet. Beispielsweise ist das Unterwerkzeug als ein in sich geschlossener Rahmen ausgebildet, sodass die Schattenfugendichtung einen äußeren Dichtring und die Fadendichtung einen inneren Dichtring in Bezug auf eine Deckelmitte realisieren. Die ausgeformte Anschäumung bildet dann einen innenliegenden Schäumungsrahmen aus, welcher beabstandet zu dem umschäumungsfreien Rand des Deckels an der Unterseite des Deckel angeordnet ist.

Ein erfindungsgemäßes Verfahren zum Bearbeiten eines Deckels für ein Kraftfahrzeug umfasst ein Bereitstellen des Deckels sowie ein Positionieren des Deckels relativ zu einem Unterwerkzeug. Das Unterwerkzeug ist zum Bearbeiten des Deckels ausgebildet und weist eine erste Ausnehmung, in der ein Dichtelement teilweise angeordnet ist, und eine zweite Ausnehmung auf. Das Dichtelement ist als Schattenfugendichtung ausgebildet, die sich aus der ersten Ausnehmung des Unterwerkzeugs heraus erstreckt. Das Verfahren umfasst weiter ein Kontaktieren des Unterwerkzeugs mit dem Deckel, wobei die Schattenfugendichtung vorgegeben abknickt oder sich vorgegeben abbiegt, und dadurch Ausbilden einer Kavität an einer Unterseite des Deckels mittels des Dichtelements und der zweiten Ausnehmung des Unterwerkzeugs. Außerdem umfasst das Verfahren ein Einbringen eines vorgegebenen Materials in die Kavität und dadurch Ausbilden einer Anschäumung an der Unterseite des Deckels, sodass die Anschäumung beabstandet von einem Rand des Deckels angeordnet ist und der Rand des Deckels umschäumungsfrei ausgebildet ist.

Mittels des beschriebenen Verfahrens ist ein zeitsparendes und aufwandarmes Bearbeiten eines Deckels möglich, welches eine kostengünstige Konstruktion einer Anordnung für ein Fahrzeugdach sowie eines Fahrzeugdachs für das Kraftfahrzeug ermöglicht. Ein solches Verfahren kann insbesondere mittels einer Ausführungsform der zuvor beschriebenen Vorrichtung durchgeführt werden, sodass sämtliche Eigenschaften und Merkmale der zuvor beschriebenen Vorrichtung auch für das Verfahren offenbart sind und umgekehrt.

Gemäß einer Weiterbildung des Verfahrens umfasst das Kontaktieren des Unterwerkzeugs mit dem Deckel und das Ausbilden der Kavität an der Unterseite des Deckels ein Ausbilden der Kavität an der Unterseite des Deckels mittels des Dichtelements, der zweiten Ausnehmung und eines weiteren Dichtelements des Unterwerkzeugs. Bei dem Kontaktieren des Deckels mit dem Unterwerkzeug wird zum Beispiel eines der Dichtungselemente kontrolliert abgeknickt, sodass es zusammen mit dem gegenüberliegenden weiteren Dichtungselement und der dazwischenliegenden zweiten Ausnehmung die Kavität für die auszubildende Anschäumung vorgegeben begrenzen.

Gemäß einer Weiterbildung des Verfahrens umfasst das Ausbilden der Anschäumung an der Unterseite des Deckels ein Anordnen eines Funktionselements an der Unterseite des Deckels. Ein solches Funktionselement kann ein Verstärkungsblech aufweisen, um die Steifigkeit des Deckels zu erhöhen, und/oder eine Schnittstelle zum Anbinden des Deckels an einer Karosserie des Kraftfahrzeugs ausbilden. Alternativ oder zusätzlich kann das Funktionselement eine Blende umfassen, um die Anschäumung und/oder weitere Elemente zu kaschieren und vorgegeben abzudecken. Alternativ oder zusätzlich kann das Funktionselement unter anderem eine Führungsschiene ausbilden, um ein kontrolliertes Führen des Deckels oder einer Verdunkelungsvorrichtung zu ermöglichen.

Eine Anordnung für ein Fahrzeugdach umfasst einen Deckel, der gemäß einem Verfahren gemäß obigem Aspekt bearbeitet wurde und welcher zum Verschließen einer Dachöffnung in dem Fahrzeugdach ausgebildet ist und welcher eine Oberseite, eine Unterseite und einen umlaufenden Rand aufweist. Die Anordnung umfasst weiter eine Anschäumung, die beabstandet von dem Rand an der Unterseite des Deckels angeordnet ist, sodass der Rand des Deckels umschäumungsfrei ausgebildet ist. Eine solche Anordnung ist insbesondere mittels eines der zuvor beschriebenen Verfahren beziehungsweise mittels einer der zuvor beschriebenen Vorrichtungen herstellbar, sodass soweit zutreffend Eigenschaften und Merkmale der Vorrichtung und des Verfahrens auch für die Anordnung offenbart sind und umgekehrt.

Ein Fahrzeugdach für ein Kraftfahrzeug umfasst mindestens eine Ausführungsform der zuvor beschriebenen Anordnung, die dazu ausgebildet ist, mittels des Deckels die Dachöffnung in dem Fahrzeugdach des Kraftfahrzeugs zu verschließen. Der Deckel kann insbesondere auch verschiebbar relativ zu dem Fahrzeugdach ausgebildet sein, um wahlweise ein Freigeben und Verschließen der Dachöffnung zu ermöglichen. Da das Fahrzeugdach eine Ausführungsform der zuvor beschriebenen Anordnung umfasst, sind sämtliche Eigenschaften und Merkmale der Anordnung beziehungsweise zutreffende Eigenschaften und Merkmale der Vorrichtung und des Verfahrens zum Bearbeiten des Deckels auch für das Fahrzeugdach offenbart und umgekehrt.

Ausführungsbeispiele der Erfindung sind im Folgenden anhand der schematischen Zeichnungen näher erläutert. Es zeigen:
- Figur 1: ein Fahrzeugdach eines Kraftfahrzeugs in einer perspektivischen Ansicht,
- Figur 2: Ausführungsbeispiel einer Vorrichtung zum Bearbeiten eines Deckels für ein Kraftfahrzeug,
- Figur 3: ein weiteres Ausführungsbeispiel der Vorrichtung zum Bearbeiten eines Deckels für ein Kraftfahrzeug,
- Figuren 4A-4B: verschiedene Ausführungsbeispiele einer Anordnung für ein Fahrzeugdach.

Elemente gleicher Konstruktion oder Funktion sind figurenübergreifend mit den gleichen Bezugszeichen gekennzeichnet.

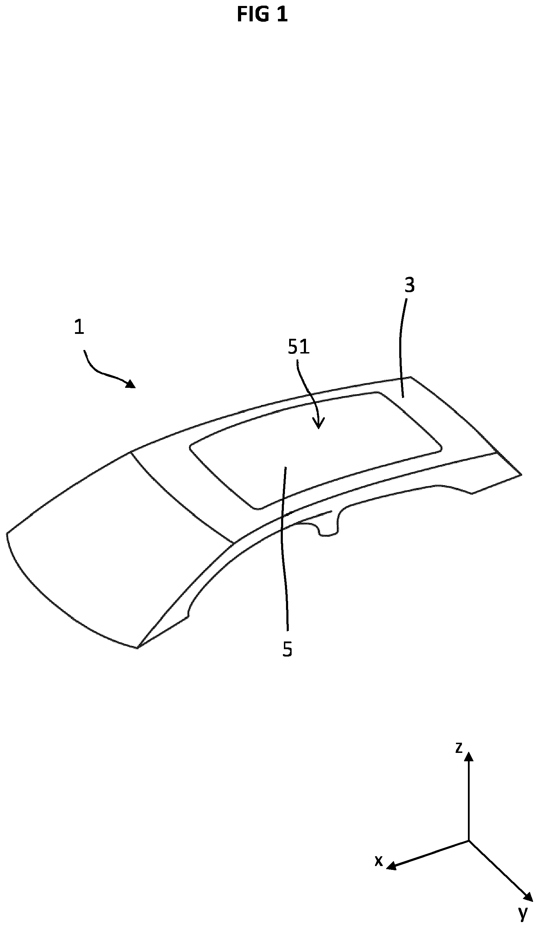

Figur 1 zeigt in einer perspektivischen Ansicht schematisch ein Kraftfahrzeug 1 mit einem Fahrzeugdach 3, das einen Deckel 5 mit einer Oberseite 51, einer Unterseite 52 und einem umlaufenden Rand 53 aufweist. Der Deckel 5 realisiert zum Beispiel ein zum Fahrzeugdach 3 unbewegliches Festglaselement. Alternativ ist der Deckel 5 relativ zum Fahrzeugdach 3 beweglich ausgestaltet, um wahlweise eine Dachöffnung in dem Fahrzeugdach 3 freizugeben und zu verschließen.

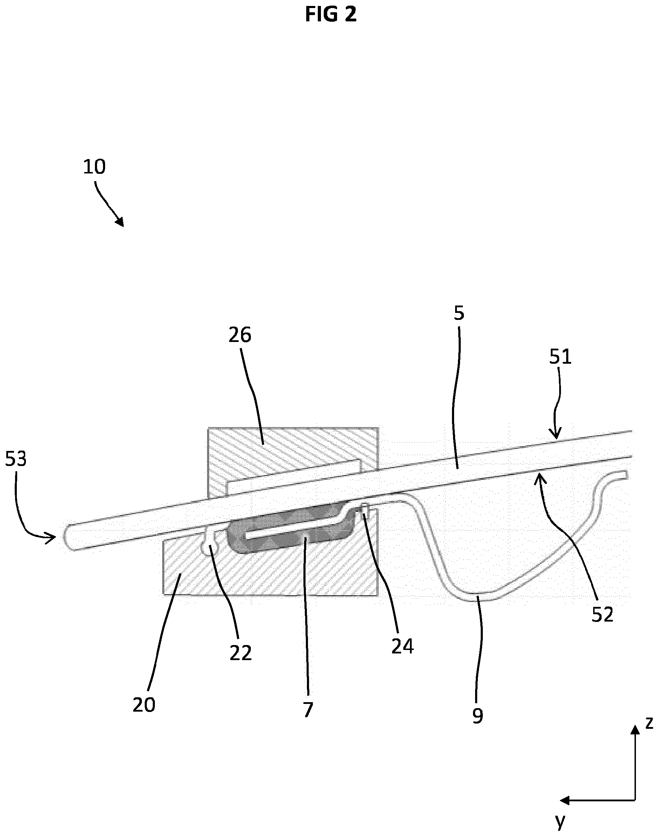

Wie anhand der nachfolgenden Figuren 2 bis 4B erläutert wird, realisiert der Deckel 5 eine Anordnung für das Fahrzeugdach 3, die auf zeitsparende und kostengünstige Weise mittels eines speziellen Formwerkzeugs ausbildbar ist.

Figur 2 illustriert in einer schematischen Schnittdarstellung einen Schritt eines Herstellungsverfahrens zum Bearbeiten des Deckels 5 und zum Ausbilden einer Anordnung für das Fahrzeugdach. Mittels einer Vorrichtung 10 kann eine einfache und kostengünstige Konstruktion des Fahrzeugdachs 3 realisiert werden.

Die Vorrichtung 10 realisiert das Formwerkzeug zum Bearbeiten des Deckels 5 und umfasst ein Unterwerkzeug 20, welches ein Dichtelement 22 sowie eine erste Ausnehmung und ein zu der ersten Ausnehmung beabstandete zweite Ausnehmung aufweist. Das Dichtelement 22 ist teilweise in der ersten Ausnehmung des Unterwerkzeugs 20 angeordnet, sodass es sich gegenüber einer Oberfläche des Unterwerkzeugs 20 erstreckt. Das Dichtelement 22 und die zweite Ausnehmung des Unterwerkzeugs 20 sind dazu ausgebildet, im Zusammenwirken mit der Unterseite 52 des Deckels 5 eine Kavität auszubilden und vorgegeben zu begrenzen.

Die Vorrichtung 10 umfasst außerdem ein Gegenlager 26, das dazu ausgebildet ist, bei einem Ausbilden der Kavität an der Unterseite 52 des Deckels 5 eine Gegenkraft an der Oberseite 51 des Deckels 5 in Richtung des Unterwerkzeugs 20 auszuüben, sodass mittels des Unterwerkzeugs 20 und des Gegenlagers 26 an der Unterseite 52 des Deckels 5 eine Anschäumung 7 beabstandet von dem Rand 53 des Deckels 5 ausbildbar ist und der Rand 53 des Deckels 5 umschäumungsfrei verbleibt.

Der Rand 53 des Deckels 5 wird bei einem Bearbeiten des Deckels 5 zum Anbringen der Anschäumung 7 nicht in einen Schäumungsprozess mit einbezogen. Eine entsprechende Nachbearbeitung eines umschäumten Deckelrands entfällt. Die Vorrichtung 10 bildet ein übersichtliches Werkzeugkonzept ohne ein komplexes formgebendes Oberwerkzeug zu benötigen. Das Gegenlager 26 realisiert eine einfache Komponente der Vorrichtung 10, um bei einem Bearbeiten des Deckels 5 eine Anlage mit einem oder mehreren Kontaktpunkten an der Oberseite 52 des Deckels 5 auszubilden und eine Gegenkraft gegen ein Andrücken des Deckels 5 und des Unterwerkzeugs 20 bereitzustellen. Auf diese einfache Weise kann mittels des Unterwerkzeugs 20 ein Ausbilden der Anschäumung 7 an einer oder mehreren vorgegebenen Positionen an der Unterseite 52 des Deckels 5 beabstandet von dem Rand 53 erfolgen, sodass dieser umschäumungsfrei verbleibt.

Dadurch, dass der Rand 53 des Deckels 5 umschäumungsfrei ausgebildet ist, entfällt ein aufwendiges Nachbearbeiten einer solchen Randumschäumung und Entfernen überstehender Oberflächenstrukturen und es wird ein Beitrag für ein zeit- und kostensparendes Bearbeiten des Deckels 5 und eine kostengünstige Konstruktion des Fahrzeugdachs 3 geleistet. Die mittels der Vorrichtung 10 ausbildbare Anschäumung 7 ist so an der Unterseite 52 des Deckels 5 ausbildbar, dass ein äußerer Rand der Anschäumung 7 noch an der Unterseite 52 des Deckels 5 endet. Der Bereich der Deckelunterseite 52 zwischen dem Rand 53 und der auszubildenden Anschäumung 7 kann vorteilhaft dazu genutzt werden, das Dichtelement 22 des Unterwerkzeugs 20 gezielt zum Ausbilden und Abdichten der Kavität zwischen dem Deckel 5 und dem Unterwerkzeug 20 einzusetzen, um ein zuverlässiges Auffüllen der Kavität und Ausbilden der Anschäumung 7 mit einem ansprechenden Endergebnis zu ermöglichen. Die ausgebildete Anschäumung 7 bedarf keiner aufwendigen Nachbearbeitung, im Rahmen derer zum Beispiel ein Teil der Anschäumung 7 zu entfernen wäre.

Die Anschäumung 7 koppelt in dem illustrierten Ausführungsbeispiel eine Funktionselement 9 mit der Unterseite 52 des Deckels 5. Ein solches Funktionselement 9 kann als ein Verstärkungsblech, eine Schnittstelle zum Anbinden des Deckels 5 an einer Karosserie des Kraftfahrzeugs 1 und/oder als eine Blende zum Kaschieren und Abdecken ausgebildet sein. Alternativ oder zusätzlich kann das Funktionselement 9 eine Führungsschiene ausbilden, um ein kontrolliertes Führen des Deckels 5 und/oder eines abschattenden Elements einer Verdunkelungsvorrichtung zu ermöglichen.

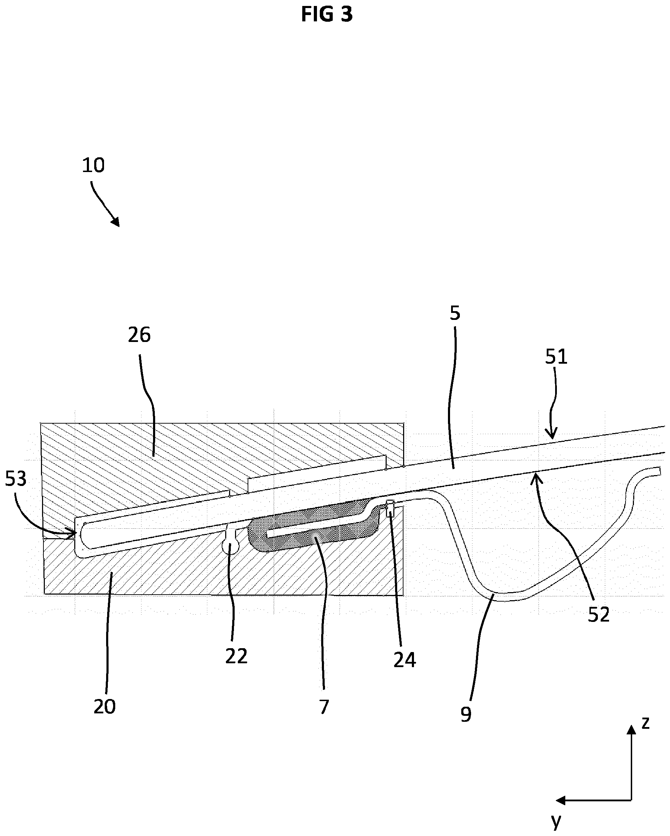

Figur 3 zeigt ein weiteres Ausführungsbeispiel der Vorrichtung 10 zum Bearbeiten des Deckels 5, in dem illustriert ist, dass sich das Gegenlager 26 und das Unterwerkzeug 20 bis hin zum Rand 53 des Deckels 5 erstrecken. Anwendungsbedingt können das Gegenlager 26 und das Unterwerkzeug 20 so ausgestaltet sein, dass sie sich im Rahmen des Bearbeitens des Deckels 5 kontaktieren. Auf diese Weise kann zu einem stabilen und zuverlässigen Anschäumungsprozess beigetragen werden.

Der Deckel 5 erstreckt sich als plattenförmiges Werkstück innerhalb einer wesentlichen Haupterstreckungsebene, die hinsichtlich des eingezeichneten Koordinatensystems in der x-y-Ebene orientiert ist. Im Vergleich dazu ist eine Dicke des Deckels 5 deutlich geringer ausgestaltet. Die Unterseite 52, die Oberseite 51 und der Rand 53 des Deckels sowie ähnliche Begrifflichkeiten, wie oben, unten, vorne und hinten, beziehen sich im Rahmen dieser Beschreibung auf übliche Positions- und Richtungsangaben hinsichtlich eines betriebsbereiten Zustands des Kraftfahrzeugs 1, welches in dem Fahrzeugdach 3 den bearbeiteten Deckel 5 aufweist. Die Oberseite 51 des Deckels 5 ist gegenüberliegend zu der Unterseite 52 des Deckels 5 ausgebildet und in dem in Figur 1 illustrierten Zustand dem Fahrzeuginnenraum abgewandt. Der Rand 53 umgibt beziehungsweise begrenzt den Deckel 5 seitlich und innerhalb der Dachöffnung dem Fahrzeugdach 3 zugewandt.

Das Dichtelement 22 des Unterwerkzeugs 20 ist als Schattenfugendichtung ausgebildet, welche ein besonders zuverlässiges und sauberes Ausbilden der Anschäumung 7 an der Deckelunterseite 52 ermöglicht. In einem nichtkontaktierenden Zustand erstreckt sich die Schattenfugendichtung beziehungsweise das Dichtelement 22 aus der ersten Ausnehmung des Unterwerkzeugs 20 heraus nach oben. Bei einem Auf- oder Anliegen der Deckelunterseite 52 und des Unterwerkzeugs 20 knickt oder biegt sich das Dichtelement 22 vorgegeben ab und begrenzt die Kavität an einem außenliegenden Bereich bezogen auf eine Deckelmitte.

Die Vorrichtung 10 beziehungsweise das Unterwerkzeug 20 weist darüber hinaus ein weiteres Dichtelement 24 auf, welches in Bezug auf die formgebende zweite Ausnehmung gegenüberliegend zu dem Dichtelement 22 in einer weiteren dritten Ausnehmung des Unterwerkzeugs 20 angeordnet ist. Das weitere Dichtelement 24 ist zum Beispiel als Fadendichtung realisiert und bildet eine innere abdichtende Begrenzung für die Kavität aus. Mittels der Vorrichtung 10 ist ein zeitsparendes und aufwandarmes Anbringen der Anschäumung 7 und Bearbeiten des Deckels 5 für das Kraftfahrzeug 1 realisierbar, welche weiter zu einer zeitsparenden und kostengünstigen Konstruktion einer Anordnung für das Fahrzeugdach 3 sowie des Fahrzeugdachs 3 für das Kraftfahrzeug 1 beitragen.

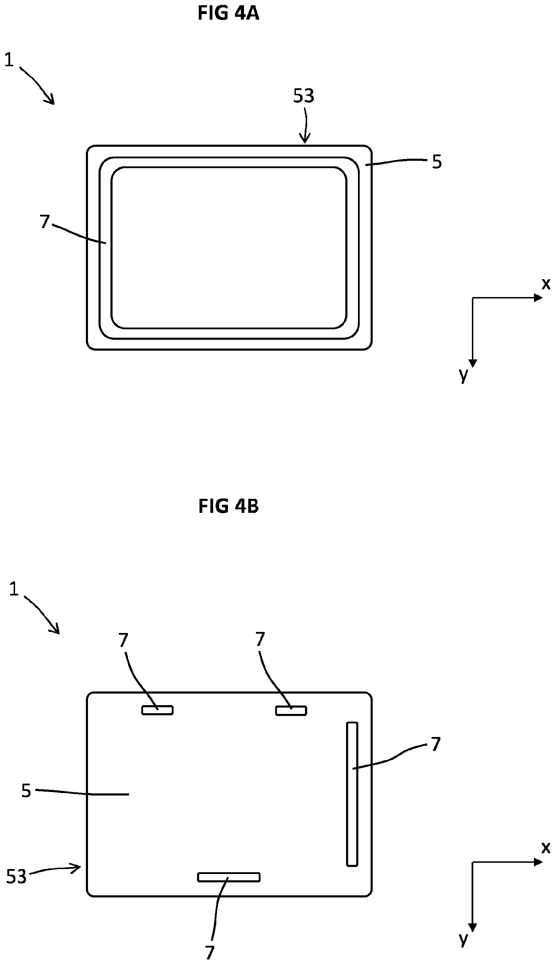

Beispielsweise ist das Unterwerkzeug 20 als ein in sich geschlossener Rahmen ausgebildet, sodass das außenliegende Dichtelement 22 einen äußeren Dichtring und das innenliegende Dichtelement 24 einen inneren Dichtring in Bezug auf eine Deckelmitte ausbilden. Auf diese Weise kann eine in sich geschlossene Anschäumung 7 ausgeformt werden, welche beabstandet zu dem umschäumungsfreien Rand 53 des Deckels 5 einen innenliegenden Schäumungsrahmen an der Unterseite 52 des Deckels 5 ausbildet (s. Figur 4A). Alternativ oder zusätzlich kann die Anschäumung 7 mehrerer zueinander separate Schäumungelemente aufweisen, die an der Unterseite 52 des Deckels 5 ausgebildet sind, sodass dieser umschäumungsfrei verbleibt (s. Figur 4B).

### Bezugszeichenliste

- 1: Kraftfahrzeug
- 3: Fahrzeugdach
- 5: Deckel
- 51: Oberseite des Deckels
- 52: Unterseite des Deckels
- 53: Rand des Deckels
- 7: Anschäumung
- 9: Funktionselement
- 10: Vorrichtung
- 20: Unterwerkzeug
- 22: Dichtelement des Unterwerkzeugs
- 24: weiteres Dichtelement des Unterwerkzeugs
- 26: Gegenlager

## Patentansprüche

1. Vorrichtung (10) zum Bearbeiten eines Deckels (5) für ein Kraftfahrzeug (1), umfassend:
- ein Unterwerkzeug (20) mit einem Dichtelement (22) sowie einer ersten Ausnehmung und einer zu der ersten Ausnehmung beabstandeten zweiten Ausnehmung, wobei das Dichtelement (22) teilweise in der ersten Ausnehmung des Unterwerkzeugs (20) angeordnet ist und sich gegenüber einer Oberfläche des Unterwerkzeugs (20) erstreckt und wobei das Dichtelement (22) und die zweite Ausnehmung des Unterwerkzeugs (20) dazu ausgebildet sind, im Zusammenwirken mit einer Unterseite (52) des Deckels (5) eine Kavität vorgegeben zu begrenzen, und
- ein Gegenlager (26), das dazu ausgebildet ist, bei einem Ausbilden der Kavität an der Unterseite (52) des Deckels (5) eine Gegenkraft an einer Oberseite (51) des Deckels (5) in Richtung des Unterwerkzeugs (20) auszuüben, sodass mittels des Unterwerkzeugs (20) und des Gegenlagers (26) an der Unterseite (52) des Deckels (5) eine Anschäumung (7) beabstandet von einem Rand (53) des Deckels (5) ausbildbar ist, sodass der Rand (53) des Deckels (5) umschäumungsfrei verbleibt, **dadurch gekennzeichnet dass** das Dichtelement (22) als Schattenfugendichtung ausgebildet ist, die sich aus der ersten Ausnehmung des Unterwerkzeugs (20) heraus erstreckt und bei einem Anliegen des Deckels (5) vorgegeben abknickt oder sich vorgegeben abbiegt.

2. Vorrichtung (10) nach Anspruch 1, bei der das Unterwerkzeug (20) ein weiteres Dichtelement (24) sowie eine weitere dritte Ausnehmung aufweist, die in Bezug auf die erste Ausnehmung an einer gegenüberliegenden Seite der zweiten Ausnehmung beabstandet zu der zweiten Ausnehmung ausgebildet ist, wobei das weitere Dichtelement (24) teilweise in der dritten Ausnehmung des Unterwerkzeugs (20) angeordnet ist und sich gegenüber einer Oberfläche des Unterwerkzeugs (20) erstreckt und wobei das weitere Dichtelement (24) und die zweite Ausnehmung des Unterwerkzeugs (20) dazu ausgebildet sind, im Zusammenwirken mit der Unterseite (52) des Deckels (5) die Kavität vorgegeben zu begrenzen.

3. Vorrichtung (10) nach Anspruch 2, bei der das weitere Dichtelement (24) als Fadendichtung ausgebildet ist.

4. Verfahren zum Bearbeiten eines Deckels (5) für ein Kraftfahrzeug (1), umfassend:
- Bereitstellen des Deckels (5),
- Positionieren des Deckels (5) und eines Unterwerkzeugs (20) relativ zueinander, wobei das Unterwerkzeug (20) eine erste und zweite Ausnehmung und ein Dichtelement (22) aufweist, das teilweise in der ersten Ausnehmung angeordnet ist, wobei das Dichtelement (22) als Schattenfugendichtung ausgebildet ist, die sich aus der ersten Ausnehmung des Unterwerkzeugs (20) heraus erstreckt,
- Kontaktieren des Unterwerkzeugs (20) mit dem Deckel (5), wobei die Schattenfugendichtung vorgegeben abknickt oder sich vorgegeben abbiegt, und dadurch Ausbilden einer Kavität an einer Unterseite (52) des Deckels (5) mittels des Dichtelements (22) und der zweiten Ausnehmung des Unterwerkzeugs (20), und
- Einbringen eines vorgegebenen Materials in die Kavität und dadurch Ausbilden einer Anschäumung (7) an der Unterseite (52) des Deckels (5), sodass die Anschäumung (7) beabstandet von einem Rand (53) des Deckels (5) angeordnet ist und der Rand (53) des Deckels (5) umschäumungsfrei ausgebildet ist.

5. Verfahren nach Anspruch 4, bei dem das Unterwerkzeug (20) ein weiteres Dichtelement (24) aufweist und das Kontaktieren des Unterwerkzeugs (20) mit dem Deckel (5) und das Ausbilden der Kavität an der Unterseite (52) des Deckels (5) umfasst:
Ausbilden der Kavität an der Unterseite (52) des Deckels (5) mittels des Dichtelements (22), der zweiten Ausnehmung und des weiteren Dichtelements (24) des Unterwerkzeugs (20).

6. Verfahren nach Anspruch 4 oder 5, bei dem das Ausbilden der Anschäumung (7) an der Unterseite (52) des Deckels (5) umfasst:
Anordnen eines Funktionselements (9) an der Unterseite (52) des Deckels (5).

7. Verfahren nach einem der Ansprüche 4 bis 6, das mittels einer Vorrichtung (10) nach einem der Ansprüche 1 bis 3 durchführbar ist.

## Claims

1. Device (10) for processing a cover (5) for a motor vehicle (1), comprising:
- a lower mould (20) having a sealing element (22) and a first recess, and a second recess at a distance from the first recess, wherein the sealing element (22) is arranged in part in the first recess of the lower mould (20) and extends with respect to a surface of the lower mould (20), and wherein the sealing element (22) and the second recess of the lower mould (20) are formed so as to define a cavity in a predefined manner in cooperation with a lower face (52) of the cover (5), and
- a counter-bearing (26) which is designed, when forming the cavity on the lower face (52) of the cover (5), to exert a counter-force on an upper face (51) of the cover (5) in the direction of the lower mould (20), such that, by means of the lower mould (20) and the counter-bearing (26), foam (7) can be formed on the lower face (52) of the cover (5) at a distance from an edge (53) of the cover (5) so that the edge (53) of the cover (5) remains free of foam encapsulation, **characterized in that** the sealing element (22) is designed as a shadow joint seal, which extends out of the first recess of the lower mould (20) and kinks or bends off in a predefined manner when the cover (5) is in contact with it.

2. Device (10) according to Claim 1, in which the lower mould (20) has an additional sealing element (24) and an additional, third recess which is formed, with respect to the first recess, on an opposite side to the second recess at a distance from the second recess, wherein the additional sealing element (24) is arranged in part in the third recess of the lower mould (20) and extends with respect to a surface of the lower mould (20), and wherein the additional sealing element (24) and the second recess of the lower mould (20) are designed so as to define the cavity in a predefined manner in cooperation with the lower face (52) of the cover (5) .

3. Device (10) according to Claim 2, in which the additional sealing element (24) is designed as a string gasket.

4. Method for processing a cover (5) for a motor vehicle (1), comprising:
- providing the cover (5),
- positioning the cover (5) and a lower mould (20) relative to each other, wherein the lower mould (20) has a first and second recess and a sealing element (22) which is arranged in part in the first recess, wherein the sealing element (22) is designed as a shadow joint seal, which extends out of the first recess of the lower mould (20),
- bringing the lower mould (20) into contact with the cover (5), wherein the shadow joint seal kinks or bends off in a predefined manner, and thereby forming a cavity on a lower face (52) of the cover (5) by means of the sealing element (22) and the second recess of the lower mould (20), and
- introducing a predefined material into the cavity and thereby forming foam (7) on the lower face (52) of the cover (5), such that the foam (7) is arranged at a distance from an edge (53) of the cover (5), and the edge (53) of the cover (5) is formed free of foam encapsulation.

5. Method according to Claim 4, in which the lower mould (20) has an additional sealing element (24), and bringing the lower mould (20) into contact with the cover (5) and forming the cavity on the lower face (52) of the cover (5) comprises:
forming the cavity on the lower face (52) of the cover (5) by means of the sealing element (22), the second recess and the additional sealing element (24) of the lower mould (20).

6. Method according to Claim 4 or 5, in which forming the foam (7) on the lower face (52) of the cover (5) comprises:
arranging a functional element (9) on the lower face (52) of the cover (5) .

7. Method according to one of Claims 4 to 6, which can be carried out by means of a device (10) according to one of Claims 1 to 3.

## Revendications

1. Dispositif (10) pour l'usinage d'un couvercle (5) pour un véhicule automobile (1), comprenant :
- un outil inférieur (20) avec un élément d'étanchéité (22) ainsi qu'un premier évidement et un deuxième évidement à distance du premier évidement, l'élément d'étanchéité (22) étant agencé partiellement dans le premier évidement de l'outil inférieur (20) et s'étendant contre une surface de l'outil inférieur (20), et l'élément d'étanchéité (22) et le deuxième évidement de l'outil inférieur (20) étant réalisés pour délimiter de manière prédéterminée une cavité en coopération avec un côté inférieur (52) du couvercle (5), et
- un contre-appui (26) qui est réalisé pour exercer une contre-force sur un côté supérieur (51) du couvercle (5) en direction de l'outil inférieur (20) lors d'une formation de la cavité sur le côté inférieur (52) du couvercle (5), de telle sorte qu'au moyen de l'outil inférieur (20) et du contre-appui (26), une mousse (7) peut être formée sur le côté inférieur (52) du couvercle (5) à distance d'un bord (53) du couvercle (5), de telle sorte que le bord (53) du couvercle (5) reste exempt de mousse,
**caractérisé en ce que**
l'élément d'étanchéité (22) est réalisé sous forme de joint d'étanchéité creux, qui s'étend hors du premier évidement de l'outil inférieur (20) et qui, lors d'une pose du couvercle (5), se plie de manière prédéterminée ou se courbe de manière prédéterminée.

2. Dispositif (10) selon la revendication 1, dans lequel l'outil inférieur (20) présente un autre élément d'étanchéité (24) ainsi qu'un autre troisième évidement qui est réalisé sur un côté opposé du deuxième évidement par rapport au premier évidement, à distance du deuxième évidement, l'autre élément d'étanchéité (24) étant partiellement agencé dans le troisième évidement de l'outil inférieur (20) et s'étendant contre une surface de l'outil inférieur (20), et l'autre élément d'étanchéité (24) et le deuxième évidement de l'outil inférieur (20) étant réalisés pour délimiter de manière prédéterminée la cavité en coopération avec le côté inférieur (52) du couvercle (5).

3. Dispositif (10) selon la revendication 2, dans lequel l'autre élément d'étanchéité (24) est réalisé sous forme de joint d'étanchéité à fil.

4. Procédé d'usinage d'un couvercle (5) pour un véhicule automobile (1), comprenant :
- la fourniture du couvercle (5),
- le positionnement du couvercle (5) et d'un outil inférieur (20) l'un par rapport à l'autre, l'outil inférieur (20) présentant un premier et un deuxième évidement et un élément d'étanchéité (22) qui est partiellement agencé dans le premier évidement, l'élément d'étanchéité (22) étant réalisé sous forme de joint d'étanchéité creux qui s'étend à l'extérieur du premier évidement de l'outil inférieur (20),
- la mise en contact de l'outil inférieur (20) avec le couvercle (5), le joint d'étanchéité creux se pliant de manière prédéterminée ou se courbant de manière prédéterminée, et ainsi la formation d'une cavité sur un côté inférieur (52) du couvercle (5) au moyen de l'élément d'étanchéité (22) et du deuxième évidement de l'outil inférieur (20), et
- l'introduction d'un matériau prédéterminé dans la cavité et ainsi la formation d'une mousse (7) sur le côté inférieur (52) du couvercle (5), de telle sorte que la mousse (7) est à distance d'un bord (53) du couvercle (5) et le bord (53) du couvercle (5) est réalisé exempt de mousse.

5. Procédé selon la revendication 4, dans lequel l'outil inférieur (20) présente un autre élément d'étanchéité (24) et la mise en contact de l'outil inférieur (20) avec le couvercle (5) et la formation de la cavité sur le côté inférieur (52) du couvercle (5) comprennent :
la formation de la cavité sur le côté inférieur (52) du couvercle (5) au moyen de l'élément d'étanchéité (22), du deuxième évidement et de l'autre élément d'étanchéité (24) de l'outil inférieur (20).

6. Procédé selon la revendication 4 ou 5, dans lequel la formation de la mousse (7) sur le côté inférieur (52) du couvercle (5) comprend :
l'agencement d'un élément fonctionnel (9) sur le côté inférieur (52) du couvercle (5).

7. Procédé selon l'une quelconque des revendications 4 à 6, qui peut être mis en œuvre au moyen d'un dispositif (10) selon l'une quelconque des revendications 1 à 3.
